# EUROPÄISCHE PATENTSCHRIFT

(11) **EP 0 325 114 B1**
(45) Veröffentlichungstag und Bekanntmachung des Hinweises auf die Patenterteilung: **03.05.1995**
(21) Anmeldenummer: 89100119.0
(22) Anmeldetag: 05.01.1989
(51) Int. Cl.: C08K 9/04, C09D 127/06, B62D 25/20

(54) **Unterbodenschutzmasse und Verfahren zu deren Herstellung**
Protection composition for bottom sub-units and method for its preparation
Composition de protection de bas de caisse et son procédé de préparation

(30) Priorität: 21.01.1988 DE 3801649
(43) Veröffentlichungstag der Anmeldung: 26.07.1989
(73) Patentinhaber: Deutsche Solvay-Werke Gesellschaft mit beschränkter Haftung, 30173 Hannover (DE)
(72) Erfinder: Aumann, Gerd, Dr.Dipl.-Chem., D-4234 Alpen-Veen (DE); Klatte, Gerd, Dr.Dipl.-Chem., D-4134 Rheinberg (DE); Korte Hans-Jürgen, Dr.Dipl.-Chem., D-4000 Düsseldorf 1 (DE)
(74) Vertreter: Lauer, Dieter, Dr.

(56) Entgegenhaltungen:
- DE-B- 1 004 800
- DE-B- 2 840 996
- WPIL, FILE SUPPLIER Derwent Publications Ltd., London, GB;& JP-A62-84175 (NISSAN MOTOR KK, NIPPON GOMU KK) 8.10.1985

## Beschreibung

Die vorliegende Erfindung betrifft eine Unterbodenschutzmasse für Kraftfahrzeuge, enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs-oder Zusatzstoff sowie ggf. einen Farbstoff, ein Farbpigment, ein Löse- und/oder Verdünnungsmittel, wobei durch die Oberflächenbehandlung eines Teiles oder des gesamten feinteiligen mineralischen Füllstoffes auf der Basis von Calciumcarbonat mit einer bestimmten organisch-chemischen Verbindung verbesserte Eigenschaften der Unterbodenschutzmasse erhalten werden.

Überzugsmittel bzw. Überzugsmassen für Metalle auf der Basis von Polyvinylchlorid, Weichmacher, Pigmenten und/oder Füllstoffen, u.a. Kreide, sind bereits bekannt (vgl. u.a. DE-A-1 229 220). Es ist weiterhin bekannt, daß die Verarbeitbarkeit bei bestimmten Anwendungsgebieten, z.B. zur Metallbeschichtung, Schwierigkeiten insofern mit sich bringt, da eine gute Verarbeitbarkeit gegeben sein muß, jedoch andererseits auch andere Anforderungen, z. B. Haftfestigkeit und dgl., bestehen.

Noch größere Anforderungen werden an Unterbodenschutzmassen für Kraftfahrzeuge, beispielsweise auf der Basis von Polyvinylchlorid gestellt, da einerseits die Unterbodenschutzmassen leicht auftragbar, gut haftbar und dgl. sein müssen und andererseits gegenüber Steinschlag und auch anderen mechanischen Einflüssen eine gewisse Widerstandsfähigkeit aufweisen müssen. Es hat sich daher ergeben, daß zahlreiche Plastisole, die beispielsweise zur Beschichtung von Papier, zur Herstellung von Tapeten, zur Herstellung von Bodenbelägen, zur Kabelummantelung und dgl. eingesetzt werden können, nicht als Unterbodenschutzmittel oder -massen geeignet sind.

Aus der JP-A-62084175 sind Unterbodenschutzmassen für Kraftfahrzeuge auf der Basis von Polyvinylchlorid bekannt, die mit Fettsäuren behandeltes Calciumcarbonat als Füllstoff enthalten. Diese Unterbodenschutzmasse besitzt zwar eine gute Fließfähigkeit und läßt sich ohne Schwierigkeiten aufbringen. Angaben über Standfestigkeit und Widerstandsfähigkeit gegenüber mechanischen Einflüssen findet man jedoch nicht.

Ziel und Aufgabe der vorliegenden Erfindung war es, eine Unterbodenschutzmasse auf der Basis von Polyvinylchlorid mit verbesserten Eigenschaften zu finden. Insbesondere sollte die Unterbodenschutzmasse verbesserte rheologische Eigenschaften aufweisen, z.B. eine gute Fließfähigkeit während der Aufbringung oder beim Spritzen besitzen. Weiterhin sollte die Unterbodenschutzmasse eine hohe Standfestigkeit nach dem Auftragen und eine gute Haftfähigkeit auf dem Untergrund aufweisen, ohne daß das Unterbodenschutzmittel in seinen anderen Eigenschaften wesentlich beeinträchtigt wird.

Erfindungsgemäß wurde festgestellt, daß diesen Zielen und Aufgaben eine Unterbodenschutzmasse für Kraftfahrzeuge gerecht wird, enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Löse- und/oder Verdünnungsmittel. Gemäß der Erfindung ist ein Teil oder der gesamte Füllstoff, vorzugsweise das Calciumcarbonat oder das Füllstoffgemisch, vorzugsweise das im Füllstoffgemisch enthaltene Calciumcarbonat, mit 0,3 bis 12 Gew.-%, vorzugsweise 1 bis 5 Gew.-% (bezogen auf 100 Gewichtsteile des oberflächebehandelten Calciumcarbonates oder des oberflächenbehandelten Füllstoffgemisches, vorzugsweise des darin enthaltenden Calciumcarbonates) mindestens einer gesättigten und/oder ungesättigten, neben mindestens einer -COOH Gruppe mindestens eine polare Gruppe enthaltenden Carbonsäure, Fettsäure, substituierten Fettsäure, einem Salz dieser Verbindung oder Fettsäurederivat, vorzugsweise mindestens eine Hydroxyl-, Carbonyl-, Ether- und/oder Aminogruppe enthaltenden aliphatischen gesättigten und/oder ungesättigten Monocarbonsäure oder Fettsäure oder mindestens einem Salz dieser mindestens eine polare Gruppe enthaltenden Monocarbonsäure mit C₂ bis C₃₂, vorzugsweise C₁₀ bis C₂₂, versehen, die bzw. das auf der Oberfläche oder auf einem Teil der Oberfläche des Füllstoffes oder Füllstoffgemisches, vorzugsweise des Calciumcarbonates, angeordnet ist. Bevorzugt werden mit den vorgenannten chemischen Verbindungen oberflächenbehandelte Calciumcarbonatteilchen in Unterbodenschutzmassen eingesetzt, die nachfolgend gemahlen sind, insbesondere um gebildete Agglomerate zu trennen.Das Calciumcarbonat weist nach einer bevorzugten Ausführungsform eine mittlere Teilchengröße von 0,01 »m bis 20 »m, vorzugsweise 0,05 »m bis 5 »m, auf. Das Calciumcarbonat ist vorzugsweise ein synthetisches Calciumcarbonat. Das eingesetzte Calciumcarbonat eine spezifische Oberfläche (BET, Adsorption mit Stickstoff) von 0,5 bis 100 m²/g, vorzugsweise 1 bis 50 m²/g, auf. Es ist als Füllstoff bevorzugt allein oder im Gemisch mit anderen Füllstoffen in der Unterbodenschutzmasse enthalten.

Als polare Gruppen enthaltende Carbonsäure wird nach einer bevorzugten Ausführungsform eine Dicarbonsäure oder ein Alkalisalz einer Dicarbonsäure, vorzugsweise Ammoniumsalz einer Dicarbonsäure, eingesetzt, wobei die zusätzliche polare Gruppe, die Carbonsäuregruppe oder Carboxylatgruppe, vorzugsweise Ammoniumcarboxylatgruppe, ist oder Carbonsäuren mit zwei Carbonsäuregruppen oder Carboxylatgruppen, vorzugsweise Ammoniumcarboxylatgruppen, in Kombination mit mindestens einer Hydroxyl-, Carbonyl-, Carboxyl-, Ether- und/oder Aminogruppe.

Nach einer bevorzugten Ausführungsform ist die polare Gruppe oder Gruppen enthaltende Carbonsäure oder Carbonsäuren, Fettsäure, substituierte Fettsäure oder Alkalisalz der Carbonsäure oder eine Mischung derselben, vorzugsweise Ammoniumsalz der Carbonsäure(n), bis zu 70 Gew.-% (bezogen auf 100 Gew.-Teile der zur Oberflächenbehandlung eingesetzten, polare Gruppen enthaltenden Carbonsäuren), vorzugsweise bis zu 50 Gew.-%, durch eine neben den Carboxyl- oder Carboxylatgruppen keine weitere polare Gruppen enthaltende gesättigte und/oder ungesättigte Monocarbonsäure, deren Alkalisalze, vorzugsweise Ammoniumsalz, mit C₂ - C₃₂ und/oder Huminsäure (oder Humussäure), deren Alkalisalz, vorzugsweise Ammoniumsalz, ersetzt.

Nach einer bevorzugten Ausführungsform enthält die Unterbodenschutzmasse 10 bis 60 Gew.-Teile, vorzugsweise 25 bis 45 Gew.-Teile, Vinylchloridhomo-, -co- oder -terpolymerisat, 10 bis 60 Gew.-Teile, vorzugsweise 20 bis 45 Gew.-Teile, eines Weichmachers oder Weichmachergemisches, 12 bis 1 Gew.-Teile, vorzugsweise 6 bis 2 Gew.-Teile, mindestens eines Farbstoffes oder Farbpigmentes, eines Additives und/oder Verarbeitungshilfs- oder Zusatzmittels, vorzugsweise Haftvermittlers und/oder Stabilisators, 10 bis 60 Gew.-Teile, vorzugsweise 15 bis 40 Gew.-Teile, mindestens eines Füllstoffes, vorzugsweise eines oberflächenbehandelten Calciumcarbonates oder eines oberflächenbehandelten, Calciumcarbonat enthaltendes Füllstoffgemisches oder besteht daraus, wobei das Calciumcarbonat oder das im Füllstoffgemisch enthaltene Calciumcarbonat mit 0,3 bis 12 Gew.-%, vorzugsweise 1 bis 5 Gew.-% (bezogen auf 100 Gewichtsteile des oberflächenbehandelten Calciumcarbonates oder des oberflächenbehandelten Füllstoffgemisches, vorzugsweise des darin enthaltenden Calciumcarbonates), mindestens einer gesättigten und/oder ungesättigten, neben mindestens einer -COOH Gruppe mindestens eine polare Gruppe enthaltenden Carbonsäure, Fettsäure, substituierten Fettsäure, einem Salz dieser Verbindung oder einem Fettsäurederivat, vorzugsweise mit mindestens einer Hydroxyl-, Carbonyl-, Carboxyl- Ether- und/oder Aminogruppe enthaltenden gesättigten und/oder ungesättigten aliphatischen Monocarbonsäure, Fettsäure, Dicarbonsäure oder mindestens einem Salz dieser mindestens eine polare Gruppe enthaltenden Monocarbonsäure mit C₂ bis C₃₂, vorzugsweise C₁₀ bis C₂₂, versehen ist, das oder die auf das auf der Oberfläche oder einem Teil der Oberfläche des Füllstoffes oder Füllstoffgemisches, vorzugsweise des Calciumcarbonates, angeordnet ist bzw. sind.

Für die erfindungsgemäße Unterbodenschutzmasse werden an sich bekannte verpastbare Vinylchloridhomo-, -co-, -ter- und/oder -pfropfpolymerisate oder verpastbare Mischungen von Polyvinylchlorid eingesetzt. Als verpastbare Vinylchloridhomo-, -co- oder -terpolymerisate können feinteilige Suspensions-, Emulsions- oder Pfropfpolymerisate, vorzugsweise jedoch Emulsionshomo-, -co- und/oder -terpolymerisate, eingesetzt werden. Als Vinylchloridco- oder -terpolymerisat werden an sich bekannte Vinylchloridco- oder -terpolymerisate mit mehr als 50 Gew.-%, vorzugsweise mehr als 80 Gew.-% Polyvinylchlorid- oder Vinylchloridanteil (bezogen auf 100 Gew.-Teile des Co- oder Terpolymerisates), vorzugsweise Vinylchlorid-Acrylat-, Vinylchlorid-Methacrylat-, Vinylchlorid-Vinylacetatcopolymerisate verwendet. Bevorzugt werden jedoch Copolymerisate mit einem Vinylchloridanteil über 90 Gew.-%, vorzugsweise über 95 Gew.-% eingesetzt. Die Herstellung der Unterbodenschutzmasse erfolgt unter Mitverwendung handelsüblicher Mischvorrichtungen oder Pastenmischer, z.B. Langsammischer (Kneter) oder Schnellmischer (Dissolver).

Als Weichmacher sind die an sich bekannten Weichmacher oder Weichmachermischungen geeignet, vorzugsweise Alkyl-, Aryl- oder Aralkylphthalate, vorzugsweise Alkylphthalate der Kettenlänge C₇ - C₁₁, Adipate, Sebacate.

Die Weichmacher können zu einem kleinen Anteil, z.B. bis zu 10, vorzugsweise 0 bis 5 Gew.-Teilen (bezogen auf Weichermachergewichtsanteile) durch die gleiche Menge eines organisch-chemischen Lösungsmittels ersetzt werden.

Die Oberflächenschicht oder das Oberflächenbehandlungsmittel des in der Unterbodenschutzmasse enthaltenden Füllstoffes oder Füllstoffgemisches, vorzugsweise des Calciumcarbonates oder des calciumcarbonathaltigen Füllstoffgemisches, besteht nach einer bevorzugten Ausführungsform aus 0,01 bis 20 Gew.-%, vorzugsweise 0,1 bis 6 Gew.-%, mindestens einer ungesättigten, neben mindestens einer -COOH Gruppe keine oder mindestens eine polare Gruppe enthaltenden Carbonsäure, Dicarbonsäure, Fettsäure, substituierten Fettsäure, einem Salz dieser Verbindung oder einem Fettsäurederivat, vorzugsweise aus mindestens einer ungesättigten, Hydroxyl-, Carbonyl-, Carboxyl-, Amino- und/oder Ethergruppen enthaltenden aliphatischen Monocarbonsäure oder mindestens einem Salz dieser mindestens eine polare Gruppe enthaltenden Monocarbonsäure (insgesamt bezogen auf 100 Gew.-Teile der eingesetzten aliphatischen Carbonsäure, Fettsäure, substituierten Fettsäure, fettsaurem Salz oder fettsaure Derivate) und 99,99 bis 80 Gew.-%, vorzugsweise 99,9 bis 94 Gew.-%, mindestens einer gesättigten, neben mindestens einer -COOH Gruppe mindestens eine polare Gruppe enthaltende Carbonsäure, Dicarbonsäure, Fettsäure, substituierten Fettsäure, einem Salz dieser Verbindung oder einem Fettsäurederivat, vorzugsweise aus mindestens einer gesättigten, Hydroxyl-, Carbonyl-, Carboxyl-, Amino- und/oder Ethergruppen enthaltenden aliphatischen Monocarbonsäure oder mindestens einem Salz dieser mindestens eine polare Gruppe enthaltenden Monocarbonsäure, oder enthält diese als Bestandteil.

Nach dieser bevorzugten Ausführungsform wird durch einen kleinen Anteil an ungesättigten, keine oder mindestens eine zusätzliche polare Gruppe enthaltenden Säuren, substituierten Fettsäuren oder fettsauren Salzen eine verbesserte Aufbringung des Oberflächenbehandlungsmittels erzielt.

Als zusätzliche Füllstoffe des Füllstoffgemisches können neben Calciumcarbonat (synthetisches und/oder natürliches Calciumcarbonat) u. a. Dolomit, Talkum (einschließlich Mikrotalkum), Kieselsäure und/oder Quarzmehl eingesetzt werden.

Nach einer bevorzugten Ausführungsform enthält die Unterbodenschutzmasse zusätzlich ein Erdalkalihydroxid und/oder Erdalkalioxid, vorzugsweise Calciumoxid in sehr geringen Mengen.

Das Oberflächenbehandlungsmittel für den Füllstoff oder das Füllstoffgemisch, vorzugsweise für das Calciumcarbonat, enthält nach einer bevorzugten Ausführungsform ein Alkali- oder Ammoniumsalz einer gesättigten, mindestens eine Hydroxylgruppe enthaltenden Carbonsäure, Fettsäure oder substituierten Fettsäure, vorzugsweise ein Alkali- oder Ammoniumsalz einer mindestens eine Hydroxylgruppe enthaltenden Fettsäure oder substituierten Fettsäure, oder besteht daraus.

Als polare Gruppen enthaltende organische Carbonsäuren werden gesättigte und/oder ungesättigte Monocarbonsäuren, Dicarbonsäuren oder Polycarbonsäuren, deren Derivate, substituierte Verbindungen und/oder Salze eingesetzt, vorzugsweise jedoch solche, die eine oder mehrere Hydroxylgruppe(n), Aminogruppe(n), Carbonylgruppe(n), Carboxylgruppe(n) und/oder Ethergruppe(n) enthalten und Salze der Monocarbonsäuren, vorzugsweise Fettsäuren, darstellen.

Bevorzugt werden Alkali- und/oder Ammoniumsalze der entsprechenden, zusätzliche polare Gruppen aufweisenden Fettsäuren mit C₂ bis C₃₂, vorzugsweise C₁₀ bis C₂₂ eingesetzt, die vollständig aus gesättigten, mindestens eine zusätzliche polare Gruppe aufweisenden Fettsäure bestehen oder bis zu 20 Gew.-%, vorzugsweise bis zu 6 Gew.-% eine ungesättigte, gegebenenfalls mindestens eine zusätzlich polare Gruppe aufweisenden Fettsäure enthalten. Bevorzugt werden die Ammoniumsalze der polare Gruppen enthaltenden Fettsäuren, vorzugsweise Hydroxylgruppen enthaltenden Fettsäuren oder Aminogruppen enthaltende Fettsäuren, vorzugsweise Hydroxystearinsäure, Hydroxypalmitinsäure, Hydroxyölsäure, Aminostearinsäure, Aminolinolsäure und/oder die Alkalisalze, vorzugsweise die Ammoniumsalze, dieser Verbindung eingesetzt.

Nach einer bevorzugten Ausführungsform ist in der Unterbodenschutzmasse ein synthetisches oberflächenbeschichtetes Calciumcarbonat enthalten, vorzugsweise hergestellt durch Einleiten von Kohlendioxid in eine Calciumhydroxidsuspension und durch nachfolgende Oberflächenbehandlung des hergestellten Calciumcarbonates mit einem Alkali- oder Ammoniumsalz einer gesättigten oder ungesättigten, neben einer mindestens eine polare Gruppe enthaltenden Carbonsäure, Dicarbonsäure, Fettsäure oder substituierten Fettsäure, vorzugsweise mit einem Alkali- oder Ammoniumsalz mindestens eine Hydroxyl-, Carbonyl-, Amino- und/oder Ethergruppe enthaltenden aliphatischen Monocarbonsäure oder Fettsäure. Dabei wird bei der Oberflächenbehandlung ganz oder teilweise die entsprechende Calciumverbindung dieser polare Gruppen enthaltenden Fettsäuren auf der Oberfläche des Calciumcarbonates gebildet.

Die auf der Oberfläche des synthetischen Calciumcarbonates nach der Aufbringung des Behandlungsmittels gebildete Oberflächenschicht besteht bevorzugt aus einem Calcium- und/oder Alkalisalz, sowie ggf. Ammoniumsalz mindestens einer, mindestens eine Hydroxylgruppe enthaltenden Fettsäure mit C₁₀ bis C₂₂, vorzugsweise 12-Hydroxystearinsäure, oder enthält diese.

Die Erfindung betrifft weiterhin ein Verfahren zur Herstellung einer Unterbodenschutzmasse für Kraftfahrzeuge, wobei die Bestandteile, im wesentlichen enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Löse- und/oder Verdünnungsmittel, miteinander vermischt werden. Gemäß der Erfindung wird das Calciumcarbonat, vorzugsweise das synthetische Calciumcarbonat, vor der Zugabe zu der Unterbodenschutzmasse oder zu einem oder mehreren Bestandteile(n) der Unterbodenschutzmasse mit einer, mindestens ein Verdünnungs- oder Lösemittel enthaltenden Lösung, Emulsion oder Suspension eines Oberflächenbehandlungsmittels in Form einer gesättigten und/oder ungesättigten, neben mindestens einer -COOH Gruppe mindestens eine polare Gruppe enthaltenden Carbonsäure, Dicarbonsäure, Fettsäure, substituierten Fettsäure, einem Salz dieser Verbindungen oder einem Fettsäurederivat, vorzugsweise mindestens einer gesättigten und/oder ungesättigten, mindestens eine Hydroxyl-, Carbonyl-, Carboxyl-, Ether- und/oder Aminogruppe enthaltenden aliphatischen Monocarbonsäure oder Fettsäure oder mindestens einem Salz dieser polare und unpolare Gruppen enthaltenden Monocarbonsäure mit C₂ bis C₂₂, bei Temperaturen von 278 K bis 368 K, vorzugsweise 328 K bis 358 K, vermischt und behandelt. Nach der Einwirkung wird das Calciumcarbonat mit der auf der Oberfläche gebildeten Oberflächenschicht abfiltriert und behandelt, vorzugsweise getrocknet und gemahlen.

Überraschenderweise wurde gefunden, daß das Filtrat einen wesentlich geringeren Carbonsäure- oder Fettsäuregehalt aufweist als bei der Verwendung einer keine polare Gruppe enthaltenden Carbonsäure bzw. Fettsäure oder deren Salze.

Nach einer bevorzugten Ausführungsform erfolgt der Zusatz der polare Gruppen aufweisenden Carbonsäure, vorzugsweise der Fettsäure, Salze der Fettsäure und/oder substituierten Fettsäure zu einer wäßrigen Calciumcarbonatsuspension, die vorzugsweise synthetisch hergestellt worden ist (gefälltes Calciumcarbonat).

Das Oberflächenbehandlungsmittel wird nach einer bevorzugten Ausführungsform in Form einer wäßrigen Emulsion der wäßrigen Calciumcarbonatsuspension zugesetzt. Bei einer bevorzugten Ausführungsform werden die Oberflächenbehandlungsmittel in Form ihrer Salze, vorzugsweise Alkali- und/oder Ammoniumsalze, zur Oberflächenbehandlung dem Calciumcarbonat, vorzugsweise der Calciumcarbonatsuspension zugegeben.

Nach einer bevorzugten Ausführungsform wird das Oberflächenbehandlungsmittel in Form des Ammoniumsalzes eingesetzt. Das Ammoniumsalz des polare Gruppen enthaltenden Oberflächenbehandlungsmittels reagiert ganz oder teilweise mit dem Calciumcarbonat auf der Oberfläche der Calciumcarbonatteilchen, so daß sich ganz oder teilweise die entsprechenden Calciumsalze des Oberflächenbehandlungsmittels auf der Oberfläche der Calciumcarbonatteilchen bilden und bei der Umsetzung die entstehenden Ammoniumverbindungen ganz oder teilweise bei der Verfahrenstemperatur sich verflüchtigen.

Die Erfindung betrifft weiterhin die Verwendung eines Calciumcarbonates oder Calciumcarbonat enthaltenden Füllstoffgemisches, das durch Behandlung mit einem Oberflächenbeschichtungsmittel auf der Basis einer gesättigten und/oder ungesättigten, neben mindestens einer -COOH Gruppe, mindestens eine polare Gruppe enthaltenden Carbonsäure, Dicarbonsäure, Fettsäure, substituierten Fettsäure, einem Salz dieser Verbindung oder Fettsäurederivat, vorzugsweise mindestens einer gesättigten und/oder ungesättigten, mindestens eine Hydroxyl-, Carbonyl-, Carboxyl-, Ether- und/oder Aminogruppe enthaltenden aliphatischen Monocarbonsäure oder Fettsäure oder mindestens einem Salz der polare Gruppen enthaltenden Monocarbonsäure mit C₂ bis C₃₂, vorzugsweise C₁₀ bis C₂₂, eine Oberflächenbeschichtung oder Oberflächenumwandlung, auf einen Teil oder der gesamten Oberfläche des Calciumcarbonates, bewirkt, so daß die Oberflächenbeschichtung aus polaren Alkali- und/oder fettsauren Erdalkalisalzen oder -carboxylaten besteht oder diese enthält, zur Rheologiesteuerung von Unterbodenschutzmassen.

Unterbodenschutzmassen werden in der Regel im Spritzverfahren aufgetragen; die dabei verwendeten Pumpdrükke sind sehr hoch, da das Plastisol aus dem Vorratsbehälter in die Förderleitungen und dann durch die Düse des Spritzkopfes, letzteres geschieht mit hoher Geschwindigkeit, gedrückt werden muß. Wünschenswert sind daher hohe Strukturviskositäten, d. h. die Viskosität ist bei hohem Schergeschwindigkeitsgefälle niedrig. Nach dem Auftrag der Unterbodenschutzmasse auf das Blech soll sie von senkrechten Stellen nicht abfließen bzw. abtropfen, d. h. sie soll ein hohes Standvermögen haben, das u. a. durch die Messung der Rheologie und Bestimmung einer Fließgrenze beschrieben werden kann. Die Oberflächenbehandlung des Calciumcarbonates führt insofern zu einer bevorzugten Rheologie, als die Fließgrenze relativ zur Viskosität bei hohem Schergeschwindigkeitsgefälle stärker ansteigt, als z.B. bei nicht oberflächenbehandelten Calciumcarbonaten.

### Beispiele für die erfindungsgemäße Unterbodenschutzmasse

### Beispiel 1:

| | |
|---|---|
| Vinylchloridhomopolymerisat (Pastentype) | 70 Gew.-Teile |
| Polyvinylchlorid (Mikrosuspensionstype) | 30 Gew.-Teile |
| Diethylhexylphthalat | 55 Gew.-Teile |
| Diisononylphthalat | 60 Gew.-Teile |
| Calciumcarbonat, oberflächenbehandelt mit dem Ammoniumsalz von 12-Hydroxystearinsäure | 70 Gew.-Teile |
| Basisches Bleisulfat | 2 Gew.-Teile |
| Polyaminoamid | 4 Gew.-Teile |
| Calciumoxid | 5 Gew.-Teile |

### Beispiel 2:

| | |
|---|---|
| Vinylchloridhomopolymerisat (Pastentype) | 30 Gew.-Teile |
| Vinylchloridcopolymerisat | 40 Gew.-Teile |
| Polyvinylchlorid (Mikrosuspensionstype) | 30 Gew.-Teile |
| Diethylhexylphthalat | 50 Gew.-Teile |
| Diisononylphthalat | 65 Gew.-Teile |
| Calciumcarbonat, oberflächenbehandelt mit dem Ammoniumsalz von 12-Hydroxystearinsäure | 70 Gew.-Teile |
| Basisches Bleisulfat | 2 Gew.-Teile |
| Polyaminoamid | 3 Gew.-Teile |
| Calciumoxid | 5 Gew.-Teile |

Die Komponenten der Unterbodenschutzmassen der Beispiele 1 sowie 2 (jeweils getrennt) wurden vermischt und mittels Dissolver homogenisiert. Die entstandenen Unterbodenschutzmassen wurden zur Bestimmung der rheologischen Eigenschaften mittels eines Rotationsviskosimeters geprüft. Die Auswertung der Meßkurven ergaben eine deutlich erhöhte Fließgrenze, ausgewertet nach der Methode Bingham, bei einer relativ niedrigeren Viskosität bei hohem Schergeschwindigkeitsgefälle. Das bedeutet, daß die Unterbodenschutzmasse wegen der hohen Strukturviskosität (hohe Strukturviskosität bedeutet etwa niedrige Viskosität bei hohem Schergeschwindigkeitsgefälle) sich leichter fördern läßt, gleichzeitig aber nach dem Auftrag nicht fließt oder abtropft wegen der relativ höheren Fließgrenze. Dieses Eigenschaftsbild war mit anderen Füllstoffen modifiziert oder nicht, bislang nicht erzielbar.

Des weiteren wurden die Unterbodenschutzmassen hinsichtlich Standfestigkeit (Rinne nach DIN 52 454 - St - U 26 - 50) überprüft; nach allen Methoden wurde eine ausgezeichnete Standfestigkeit gefunden. Alle übrigen Anforderungen an eine Unterbodenschutzmasse wurden ebenso erfüllt (Gelierbedingungen, Haftung).

### Herstellung des oberflächenbehandelten Calciumcarbonat:

Die Herstellung des erfindungsgemäß oberflächenbehandelten Calciumcarbonates erfolgte in der nachstehendend beschriebenen Weise:

Durch Einleiten von Kohlendioxid in eine wäßrige Suspension von 150 g Calciumhydroxid pro Liter wurde das Calciumcarbonat gefällt. Die Reaktionsendtemperatur betrug 70 °C. Die anschließende Oberflächenbehandlung erfolgt durch Zugabe einer ebenfalls auf 70 °C erwärmten wäßrigen Emulsion von 12-Hydroxystearinsäure, die als Ammoniumsalz vorlag. Die Zugabemenge wurde derart gewählt, daß eine Oberflächenbehandlungsmenge von 30 g/kg Calciumcarbonat resultierte. Nach intensivem Rühren wurde die Suspension filtriert, das erhaltene oberflächenbeschichtete Calciumcarbonat bei 105 °C getrocknet und nachfolgend gemahlen.

### Beispiel 3:

Zusammensetzung wie Beipiel 1. Das Calciumcarbonat war jedoch mit dem Ammoniumsalz der Glutaminsäure oberflächenbehandelt.

### Beispiel 4:

Zusammensetzung wie Beispiel 1. Das Calciumcarbonat war jedoch mit einem Gemisch der Ammoniumsalze von 12-Hydroxystearinsäure und Huminsäure im Gewichtsverhältnis 1 : 1 oberflächenbehandelt.

### Beispiel 5:

Zusammensetzung wie Beispiel 1. Das Calciumcarbonat war jedoch mit dem Ammoniumsalz der 3,6,9-Trioxaundecandisäure oberflächenbehandelt.

### Beispiel 6:

Zusammensetzung wie Beispiel 1. Das Calciumcarbonat war jedoch mit dem Ammoniumsalz der Brenztraubensäure oberflächenbehandelt.

### Beispiel 7:

Zusammensetzung wie Beispiel 2. Das Calciumcarbonat war jedoch mit einem Gemisch, bestehend aus dem Amoniumsalz von 12-Hydroxystearinsäure und hochreiner Stearinsäure im Gewichtsverhältnis 1 : 1 oberflächenbehandelt.

### Vergleichsbeispiel 8:

Zusammensetzung wie Beispiel 1. Das Calciumcarbonat war jedoch mit Fettsäure (techn.), nämlich Gemische von Stearin-, Palmitin- und Ölsäure (ST Edenor 20) oberflächenbehandelt.

Die ermittelten Fließgrenzen und Viskositäten für die Beispiele 1, 3, 4, 5, 6 und Vergleichsbeispiel 8 sind aus der Tabelle ersichtlich.

| Beispiel | Substanzen für die Oberflächenbehandlung in Form der Ammoniumsalze folgender Carbonsäuren: | Fließgrenze (Pa) | Viskosität (Pa·s) |
|---|---|---|---|
| 1 | 12-Hydroxystearinsäure | 229 | 23,1 |
| 3 | Glutaminsäure | 262 | 22 |
| 4 | Huminsäure/12-Hydroxystearinsäure | 365 | 30,7 |
| 5 | 3,6,9-Trioxaundecandisäure | 274 | 16,8 |
| 6 | Brenztraubensäure | 308 | 24,4 |
| 8 | Fettsäure (techn.) | 81 | 8,0 |

## Patentansprüche

1. Unterbodenschutzmasse für Kraftfahrzeuge, enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff, sowie ggf. mindestens einen Farbstoff, ein Farbpigment, ein Löse- und/oder Verdünnungsmittel, dadurch gekennzeichnet, daß ein Teil oder der gesamte Füllstoff mit
0,3 bis 12 Gew.-%,
(bezogen auf 100 Gewichtsteile des oberflächenbehandelten Calciumcarbonates oder des oberflächenbehandelten Füllstoffgemisches) mindestens einer gesättigten und/oder ungesättigten, neben mindestens einer -COOH Gruppe mindestens eine polare Gruppe enthaltenden Carbonsäure, Fettsäure, substituierten Fettsäure, einem Salz dieser Verbindung oder Fettsäurederivat, versehen ist, die bzw. das auf der Oberfläche oder auf einem Teil der Oberfläche des Füllstoffes oder Füllstoffgemisches angeordnet ist.

2. Unterbodenschutzmasse nach Anspruch 1, dadurch gekennzeichnet, daß das Calciumcarbonat eine mittlere Teilchengröße von
0,01 »m bis 20 »m, vorzugsweise
0,05 »m bis 5 »m,
aufweist.

3. Unterbodenschutzmasse nach Ansprüchen 1 und 2, dadurch gekennzeichnet, daß das eingesetzte Calciumcarbonat eine spezifische Oberfläche (BET, Adsorption mit Stickstoff) von
0,5 bis 100 m²/g, vorzugsweise
1 bis 50 m²/g,
aufweist.

4. Unterbodenschutzmasse nach einem oder mehreren der Ansprüche 1 bis 3, dadurch gekennzeichnet, daß als polare Gruppen enthaltende Carbonsäure eine Dicarbonsäure oder ein Alkalisalz einer Dicarbonsäure, vorzugsweise Ammoniumsalz einer Dicarbonsäure, eingesetzt ist, wobei die zusätzliche polare Gruppe, die Carbonsäuregruppe oder Carboxylatgruppe, vorzugsweise Ammoniumcarboxylatgruppe, oder die zwei Carbonsäuregruppen oder Carboxylatgruppen, vorzugsweise Ammoniumcarboxylatgruppe, in Kombination mit mindestens einer Hydroxyl-, Carbonyl-, Carboxyl-, Ether- und/oder Aminogruppe vorhanden ist.

5. Unterbodenschutzmasse nach einem oder mehreren der Ansprüche 1 bis 4, dadurch gekennzeichnet, daß die polare Gruppe oder Gruppen enthaltende Carbonsäure oder Carbonsäuren, Fettsäure, substituierte Fettsäure oder Alkalisalz der Carbonsäure oder eine Mischung derselben, vorzugsweise Ammoniumsalz der Carbonsäure(n), bis zu 70 Gew.-% (bezogen auf 100 Gew.-Teile der zur Oberflächenbehandlung eingesetzten, polare Gruppen enthaltenden Carbonsäuren), vorzugsweise bis zu 50 Gew.-%, durch eine neben den Carboxyl- oder Carboxylatgruppen keine weitere polare Gruppen enthaltende gesättigte und/oder ungesättigte Monocarbonsäure, deren Alkalisalze, vorzugsweise Ammoniumsalz, mit C₂ - C₃₂ und/oder Huminsäure (oder Humussäure), deren Alkalisalz, vorzugsweise Ammoniumsalz, ersetzt ist.

6. Unterbodenschutzmasse nach einem oder mehreren der Ansprüche 1 bis 5, dadurch gekennzeichnet, daß die Unterbodenschutzmasse
10 bis 60 Gew.-Teile, vorzugsweise
25 bi 45 Gew.-Teile Vinylchloridhomo-, -co- oder -terpolymerisat,
10 bis 60 Gew.-Teile, vorzugsweise
20 bis 45 Gew.-Teile,
eines Weichmachers oder Weichmachergemisches,
12 bis 1 Gew.-Teile, vorzugsweise
6 bis 2 Gew.-Teile,
mindestens eines Farbstoffes oder Farbpigmentes, eines Additives und/oder Verarbeitungshilfs- oder Zusatzmittels, vorzugsweise Haftvermittlers und/oder Stabilisators,
10 bis 60 Gew.-Teile, vorzugsweise
15 bis 40 Gew.-Teile,
mindestens eines Füllstoffes, vorzugsweise eines oberflächenbehandelten Calciumcarbonates oder eines oberflächenbehandelten, Calciumcarbonat enthaltenden Füllstoffgemisches, enthält oder daraus besteht, das mit
0,3 bis 12 Gew.-%, vorzugsweise
1 bis 5 Gew.-%
(bezogen auf 100 Gewichtsteile des oberflächenbehandelten Calciumcarbonates oder des oberflächenbehandelten Füllstoffgemisches, vorzugsweise des darin enthaltenden Calciumcarbonates), mindestens einer gesättigten und/oder ungesättigten, neben mindestens einer -COOH Gruppe mindestens eine polare Gruppe enthaltenden Carbonsäure, Fettsäure, substituierten Fettsäure, einem Salz dieser Verbindung oder Fettsäurederivat, vorzugsweise mindestens einer Hydroxyl-, Carbonyl-, Carboxyl-, Ether- und/oder Aminogruppe enthaltenden gesättigten und/oder ungesättigten aliphatischen Monocarbonsäure, Fettsäure, Dicarbonsäure oder mindestens einem Salz dieser mindestens eine polare Gruppe enthaltenden Monocarbonsäure oder Dicarbonsäure, vorzugsweise Ammoniumsalz derselben mit
C₂ bis C₃₂, vorzugsweise
C₁₀ bis C₂₂,
versehen ist, die auf der Oberfläche oder einem Teil der Oberfläche des Füllstoffes oder Füllstoffgemisches, vorzugsweise des Calciumcarbonates, angeordnet ist.

7. Unterbodenschutzmasse nach einem oder mehreren der Ansprüche 1 bis 6, dadurch gekennzeichnet, daß die Oberflächenschicht oder das Oberflächenbehandlungsmittel des in der Unterbodenschutzmasse enthaltenden Füllstoffes oder Füllstoffgemisches, vorzugsweise des Calciumcarbonates oder des calciumcarbonathaltigen Füllstoffgemisches, aus
0,01 bis 20 Gew.-%, vorzugsweise
0,1 bis 6 Gew.-%,
mindestens einer ungesättigten, neben mindestens einer -COOH Gruppe, keine oder mindestens eine polare Gruppe enthaltende Carbonsäure, Dicarbonsäure, Fettsäure, substituierten Fettsäure, einem Salz dieser Verbindung oder ein Fettsäurederivat aufweist, vorzugsweise aus mindestens einer ungesättigten, Hydroxyl-, Carbonyl-, Carboxyl-, Amino-und/oder Ethergruppen enthaltenden aliphatischen Monocarbonsäure, Dicarbonsäure oder mindestens einem Salz dieser mindestens eine unpolare und/oder polare Gruppe enthaltenden Monocarbonsäure oder Dicarbonsäure ist (insgesamt bezogen auf 100 Gew.-Teile der eingesetzten aliphatischen Carbonsäure, Fettsäure, substituierten Fettsäure, fettsaurem Salz oder fettsaure Derivate) und
99,99 bis 80 Gew.-%, vorzugsweise
99,9 bis 94 Gew.-%,
mindestens einer gesättigten, neben mindestens einer -COOH Gruppe mindestens eine polare Gruppe enthaltende Carbonsäure, Dicarbonsäure, Fettsäure, substituierten Fettsäure, einem Salz dieser Verbindung oder einem Fettsäurederivat, vorzugsweise aus mindestens einer gesättigten, Hydroxyl-, Carbonyl-, Carboxyl-, Amino- und/oder Ethergruppen enthaltenden aliphatischen Monocarbonsäure, Dicarbonsäure oder mindestens einem Salz dieser mindestens eine polare Gruppe enthaltenden Monocarbonsäure oder Dicarbonsäure, besteht oder diese als Bestandteil enthält.

8. Unterbodenschutzmasse nach einem oder mehreren der Ansprüche 1 bis 7, dadurch gekennzeichnet, daß das Oberflächenbehandlungsmittel für den Füllstoff oder das Füllstoffgemisch, vorzugsweise für das Calciumcarbonat, ein Alkali- oder Ammoniumsalz einer gesättigten oder ungesättigten, mindestens eine Hydroxylgruppe enthaltenden Carbonsäure, Dicarbonsäure, Fettsäure oder substituierten Fettsäure, vorzugsweise ein Alkali- oder Ammoniumsalz einer mindestens eine Hydroxylgruppe und/oder zusätzliche Carboxylgruppen enthaltenden Fettsäure oder substituierten Fettsäure, enthält oder daraus besteht.

9. Unterbodenschutzmasse nach einem oder mehreren der Ansprüche 1 bis 8, dadurch gekennzeichnet, daß in der Unterbodenschutzmasse ein synthetisches oberflächenbeschichtetes Calciumcarbonat enthalten ist, vorzugsweise hergestellt durch Einleitung von Kohlendioxid in eine Calciumhydroxidsuspension und durch nachfolgende Oberflächenbehandlung des hergestellten Calciumcarbonates mit einem Alkali- oder Ammoniumsalz einer gesättigten oder ungesättigten, mindestens eine polare Gruppe enthaltenden Carbonsäure, Dicarbonsäure, Fettsäure oder substituierten Fettsäure, vorzugsweise mit mindestens einem Salz der Monocarbonsäure oder Fettsäure oder Dicarbonsäure, die mindestens eine Hydroxyl-, Carbonyl-, Carboxyl-, Amino- und/oder Ethergruppe enthält.

10. Unterbodenschutzmasse nach einem oder mehreren der Ansprüche 1 bis 9, dadurch gekennzeichnet, daß die auf der Oberfläche des synthetischen Calciumcarbonates nach der Aufbringung des Behandlungsmittels gebildete Oberflächenschicht aus einem Calcium- und/oder Alkalisalz sowie ggf. Ammoniumsalz mindestens einer, mindestens eine Hydroxylgruppe enthaltenden Fettsäure mit
C₁₀ bis C₂₂
vorzugsweise 12-Hydroxystearinsäure, besteht oder diese enthält.

11. Verfahren zur Herstellung einer Unterbodenschutzmasse für Kraftfahrzeuge, wobei die Bestandteile im wesentlichen enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Löse- und/oder Verdünnungsmittel, miteinander vermischt werden, dadurch gekennzeichnet, daß das Calciumcarbonat, vorzugsweise das synthetische Calciumcarbonat, vor der Zugabe zu der Unterbodenschutzmasse oder zu einem oder mehreren Bestandteile(n) der Unterbodenschutzmasse mit einer, mindestens ein Verdünnungs- oder Lösemittel enthaltenden Lösung, Emulsion oder Suspension eines Oberflächenbehandlungsmittels in Form einer gesättigten und/oder ungesättigten, neben mindestens einer -COOH Gruppe mindestens eine polare Gruppe enthaltenden Carbonsäure, Dicarbonsäure, Fettsäure, substituierten Fettsäure, einem Salz dieser Verbindungen oder einem Fettsäurederivat, vorzugsweise mindestens einer gesättigten und/oder ungesättigten, mindestens eine Hydroxyl-, Carbonyl-, Carboxyl-, Ether- und/oder Aminogruppe enthaltenden aliphatischen Monocarbonsäure Fettsäure, Dicarbonsäure oder mindestens einem Salz dieser mindestens eine polare Gruppe enthaltenden Monocarbonsäure oder Dicarbonsäure mit C₂ bis C₂₂ bei Temperaturen von
278 K bis 368 K, vorzugsweise
328 K bis 358 K,
vermischt und behandelt wird, daß nach der Einwirkung das Calciumcarbonat mit der auf der Oberfläche gebildeten Oberflächenschicht abfiltriert und behandelt, vorzugsweise getrocknet und gemahlen wird.

12. Verwendung eines Calciumcarbonates oder Calciumcarbonat enthaltenden Füllstoffgemisches, das durch Behandlung mit einem Oberflächenbeschichtungsmittel auf der Basis einer gesättigten und/oder ungesättigten, neben mindestens einer -COOH Gruppe, mindestens eine polare Gruppe enthaltenden Carbonsäure, Fettsäure, substituierten Fettsäure, Dicarbonsäure, einem Salz dieser Verbindung oder Fettsäurederivat, vorzugsweise mindestens einer gesättigten und/oder ungesättigten, mindestens eine Hydroxyl-, Carbonyl-, Carboxyl-, Ether- und/oder Aminogruppe enthaltenden Monocarbonsäure oder Fettsäure oder Dicarbonsäure oder mindestens einem Salz der mindestens polare Gruppe enthaltenden Monocarbonsäure mit
C₂ bis C₃₂, vorzugsweise
C₁₀ bis C₂₂,
eine Oberflächenbeschichtung oder Oberflächenumwandlung, auf einen Teil oder der gesamten Oberfläche des Calciumcarbonates bewirkt, so daß die Oberflächenbeschichtung aus polaren Alkali- und/oder Erdalkalisalzen der Carbonsäure, Fettsäure, Dicarbonsäure oder -carboxylaten besteht oder diese enthält, zur Rheologiesteuerung von Unterbodenschutzmassen.

13. Unterbodenschutzmasse für Kraftfahrzeuge nach Anspruch 1, dadurch gekennzeichnet, daß das Calciumcarbonat oder das Füllstoffgemisch, vorzugsweise das im Füllstoffgemisch enthaltene Calciumcarbonat mit
1 bis 5 Gew.-%
(bezogen auf 100 Gewichtsteile des oberflächenbehandelten Calciumcarbonates oder des oberflächenbehandelten Füllstoffgemisches, vorzugsweise das darin enthaltene Calciumcarbonat) mindestens eine Hydroxyl-, Carbonyl-, Ether- und/oder Aminogruppe enthaltenden aliphatischen gesättigten und/oder ungesättigten, mindestens eine polare Gruppe enthaltenden Monocarbonsäure oder Fettsäure oder mindestens einem Salz dieser mindestens eine polare Gruppe enthaltenden Monocarbonsäure mit
C₂ bis C₃₂, vorzugsweise
C₁₀ bis C₂₂
versehen ist, die bzw. das auf der Oberfläche oder auf einem Teil der Oberfläche des Calciumcarbonates angeordnet ist.

## Claims

1. An underseal composition for motor vehicles, containing at least one finely-divided vinyl chloride homopolymer, copolymer, terpolymer or graft polymer, at least one softener, at least one stabiliser, at least one filler on the basis of calcium carbonate or a filler mixture containing calcium carbonate and at least one adhesion promoter and/or another auxiliary or additive, and also optionally at least one dye, a coloured pigment, a solvent and/or diluent, characterised in that part of or the entire filler is provided with
0.3 to 12% by weight
(relative to 100 parts by weight of the surface-treated calcium carbonate or the surface-treated filler mixture) of at least one saturated and/or unsaturated carboxylic acid, fatty acid, substituted fatty acid, a salt of this compound or fatty acid derivative, containing in addition to at least one -COOH group at least one polar group, which acid, salt or derivative is located on the surface or on part of the surface of the filler or filler mixture.

2. An underseal composition according to Claim 1, characterized in that the calcium carbonate has an average particle size of
0.01 »m to 20 »m, preferably
0.05 »m to 5 »m.

3. An underseal composition according to Claims 1 and 2, characterised in that the calcium carbonate used has a specific surface area (BET, adsorption with nitrogen) of
0.5 to 100 m²/g, preferably
1 to 50 m²/g.

4. An underseal composition according to one or more of Claims 1 to 3, characterised in that a dicarboxylic acid or an alkali salt of a dicarboxylic acid, preferably ammonium salt of a dicarboxylic acid, is used as the carboxylic acid containing polar groups, with the additional polar group, the carboxylic acid group or carboxylate group, preferably ammonium carboxylate group, or the two carboxylic acid groups or carboxylate groups, preferably ammonium carboxylate group, being present in combination with at least one hydroxyl, carbonyl, carboxyl, ether and/or amino group.

5. An underseal composition according to one or more of Claims 1 to 4, characterised in that up to 70% by weight (relative to 100 parts by weight of the carboxylic acids containing polar groups which are used for surface treatment), preferably up to 50% by weight, of the carboxylic acid or carboxylic acids, fatty acid, substituted fatty acid or alkali salt of carboxylic acid or a mixture thereof containing a polar group or groups, preferably ammonium salt of the carboxylic acid(s), is replaced by a saturated and/or unsaturated monocarboxylic acid which does not contain any other polar groups in addition to the carboxyl or carboxylate groups, the alkali salts, preferably ammonium salt, thereof with C₂ - C₃₂ and/or humic acid, the alkali salt thereof, preferably ammonium salt.

6. An underseal composition according to one or more of Claims 1 to 5, characterised in that the underseal composition contains or consists of
10 to 60 parts by weight, preferably
25 to 45 parts by weight,
vinyl chloride homopolymer, copolymer or terpolymer,
10 to 60 parts by weight, preferably
20 to 45 parts by weight,
of a softener or softener mixture,
12 to 1 parts by weight, preferably
6 to 2 parts by weight,
of at least one dye or coloured pigment, an additive and/or processing aid or additive, preferably adhesion promoter and/or stabiliser,
10 to 60 parts by weight, preferably
15 to 40 parts by weight,
of at least one filler, preferably a surface-treated calcium carbonate or a surface-treated filler mixture containing calcium carbonate, which is provided with
0.3 to 12% by weight, preferably
1 to 5% by weight,
(relative to 100 parts by weight of the surface-treated calcium carbonate or the surface-treated filler mixture, preferably the calcium carbonate contained therein) of at least one saturated and/or unsaturated carboxylic acid, fatty acid, substituted fatty acid, a salt of this compound or fatty acid derivative, containing in addition to at least one -COOH group at least one polar group, preferably at least one saturated and/or unsaturated aliphatic monocarboxylic acid, fatty acid, dicarboxylic acid containing a hydroxyl, carbonyl, carboxyl, ether and/or amino group or at least one salt of this monocarboxylic acid or dicarboxylic acid which contains at least one polar group, preferably ammonium salt thereof with
C₂ to C₃₂, preferably
C₁₀ to C₂₂,
which is located on the surface or on part of the surface of the filler or filler mixture, preferably of the calcium carbonate.

7. An underseal composition according to one or more of Claims 1 to 6, characterised in that the surface layer or the surface treatment agent of the filler or filler mixture contained in the underseal composition, preferably of the calcium carbonate or of the filler mixture containing calcium carbonate, consists of or contains as a constituent
0.01 to 20% by weight, preferably
0.1 to 6% by weight,
of at least one unsaturated carboxylic acid, dicarboxylic acid, fatty acid, substituted fatty acid, a salt of this compound or fatty acid derivative, containing in addition to at least one -COOH group no or at least one polar group, preferably consists of or contains at least one unsaturated aliphatic monocarboxylic acid, dicarboxylic acid containing hydroxyl, carbonyl, carboxyl, amino and/or ether groups or at least one salt of this monocarboxylic acid or dicarboxylic acid which contains at least one non-polar and/or polar group (in total relative to 100 parts by weight of the aliphatic carboxylic acid, fatty acid, substituted fatty acid, fatty-acid salt or fatty-acid derivatives used) and
99.99 to 80% by weight, preferably
99.9 to 94% by weight,
of at least one saturated carboxylic acid, dicarboxylic acid, fatty acid, substituted fatty acid, a salt of this compound or a fatty acid derivative, containing in addition to at least one -COOH group at least one polar group, preferably of at least one saturated aliphatic monocarboxylic acid, dicarboxylic acid containing hydroxyl, carbonyl, carboxyl, amino and/or ether groups or at least one salt of this monocarboxylic acid or dicarboxylic acid which contains at least one polar group.

8. An underseal composition according to one or more of Claims 1 to 7, characterised in that the surface treatment agent for the filler or the filler mixture, preferably for the calcium carbonate, contains or consists of an alkali or ammonium salt of a saturated or unsaturated carboxylic acid, dicarboxylic acid, fatty acid or substituted fatty acid containing at least one hydroxyl group, preferably an alkali or ammonium salt of a fatty acid or substituted fatty acid containing at least one hydroxyl group and/or additional carboxyl groups.

9. An underseal composition according to one or more of Claims 1 to 8, characterised in that the underseal composition contains a synthetic surface-coated calcium carbonate, preferably produced by introducing carbon dioxide into a calcium hydroxide suspension and by subsequent surface treatment of the calcium carbonate produced with an alkali or ammonium salt of a saturated or unsaturated carboxylic acid, dicarboxylic acid, fatty acid or substituted fatty acid containing at least one polar group, preferably with at least one salt of the monocarboxylic acid or fatty acid or dicarboxylic acid which contains at least one hydroxyl, carbonyl, carboxyl, amino and/or ether group.

10. An underseal composition according to one or more of Claims 1 to 9, characterised in that the surface layer formed on the surface of the synthetic calcium carbonate after the application of the treatment agent consists of or contains a calcium and/or alkali salt and also optionally ammonium salt of at least one fatty acid with
C₁₀ to C₂₂
containing at least one hydroxyl group, preferably 12-hydroxy stearic acid.

11. A method for producing an underseal composition for motor vehicles, in which the constituents substantially containing at least one finely-divided vinyl chloride homopolymer, copolymer, terpolymer or graft polymer, at least one softener, at least one stabiliser, at least one filler on the basis of calcium carbonate or a filler mixture containing calcium carbonate and at least one adhesion promoter and/or another auxiliary or additive, and also optionally a dye, a coloured pigment, a solvent and/or diluent, are mixed together, characterised in that the calcium carbonate, preferably the synthetic calcium carbonate, before the addition to the underseal composition or to one or more constituent(s) of the underseal composition, is mixed and treated with a solution, emulsion or suspension, containing at least one diluent or solvent, of a surface treatment agent in the form of a saturated and/or unsaturated carboxylic acid, dicarboxylic acid, fatty acid, substituted fatty acid, a salt of these compounds or a fatty acid derivative, containing in addition to at least one -COOH group at least one polar group, preferably at least one saturated and/or unsaturated aliphatic monocarboxylic acid, fatty acid, dicarboxylic acid containing at least one hydroxyl, carbonyl, carboxyl, ether and/or amino group or at least one salt of this monocarboxylic acid or dicarboxylic acid which contains at least one polar group with C₂ to C₂₂ at temperatures of
278 to 368 K, preferably
328 K to 358 K,
that after the action the calcium carbonate with the surface layer formed on the surface is filtered off and treated, preferably dried and ground.

12. The use of a calcium carbonate or filler mixture containing calcium carbonate which by treatment with a surface coating agent on the basis of a saturated and/or unsaturated carboxylic acid, fatty acid, substituted fatty acid, dicarboxylic acid, a salt of this compound or a fatty acid derivative, containing in addition to at least one -COOH group at least one polar group, preferably at least one saturated and/or unsaturated monocarboxylic acid or fatty acid or dicarboxylic acid containing at least one hydroxyl, carbonyl, carboxyl, ether and/or amino group or at least one salt of the monocarboxylic acid which contains at least one polar group with
C₂ to C₃₂, preferably
C₁₀ to C₂₂,
brings about surface coating or surface conversion on a part or the entire surface of the calcium carbonate, so that the surface coating consists of or contains polar alkali salts and/or alkaline earth salts of the carboxylic acid, fatty acid, dicarboxylic acid or carboxylates, for the rheology control of underseal compositions.

13. An underseal composition for motor vehicles according to Claim 1, characterised in that the calcium carbonate or the filler mixture, preferably the calcium carbonate contained in the filler mixture, is provided with
1 to 5% by weight
(relative to 100 parts by weight of the surface-treated calcium carbonate or the surface-treated filler mixture, preferably the calcium carbonate contained therein) at least one aliphatic saturated and/or unsaturated monocarboxylic acid or fatty acid which contains at least one polar group and containing at least one hydroxyl, carbonyl, carboxyl, ether and/or amino group or at least one salt of this monocarboxylic acid which contains at least one polar group, with
C₂ to C₃₂, preferably
C₁₀ to C₂₂,
which acid or salt is located on the surface or on part of the surface of the calcium carbonate.

## Revendications

1. Composition de protection de bas de caisse pour véhicules automobiles contenant au moins un homo-, co-, ter- ou polymère greffé de chlorure de vinyle finement divisé, au moins un plastifiant, au moins un stabilisant, au moins une charge à base de carbonate de calcium ou un mélange de charges contenant du carbonate de calcium et au moins un agent d'accrochage et/ou un autre additif ou adjuvant, ainsi qu'éventuellement au moins un colorant, un colorant pigmentaire, un solvant et/ou un diluant, caractérisé en ce qu'une partie ou la totalité de la charge est pourvue de 0,3 à 12% en poids (par rapport à 100 parties en poids du carbonate de calcium traité en surface ou du mélange de charges traité en surface) d'au moins un acide carboxylique, un acide gras, un acide gras, substitué, un sel de ce composé ou un dérivé d'acide gras saturé et/ou insaturé, contenant, à côté d'au moins un groupe -COOH, au moins un groupe polaire, lequel est disposé à la surface ou sur une partie de la surface de la charge ou du mélange de charges.

2. Composition de protection de bas de caisse selon la revendication 1, caractérisée en ce que le carbonate de calcium possède une taille de particule moyenne
de 0,01 »m à 20 »m, de préférence
de 0,05 »m à 5 »m.

3. Composition de protection de bas de caisse selon les revendications 1 et 2, caractérisée en ce que le carbonate de calcium mis en oeuvre présente une aire spécifique (BET, adsorption avec de l'azote)
de 0,5 à 100 m²/g, de préférence
de 1 à 50 m²/g.

4. Composition de protection de bas de caisse selon une ou plusieurs des revendicatins 1 à 3, caractérisée en ce qu'on met en oeuvre, en tant qu'acide carboxylique contenant des groupes polaires, un acide dicarboxylique ou un sel alcalin d'un acide dicarboxylique, de préférence le sel d'ammonium d'un acide dicarboxylique, le groupe polaire additionnel, le groupe acide carboxylique ou le groupe carboxylate, de préférence le groupe carboxylate d'ammonium, ou les deux groupes acide carboxylique ou groupes carboxylate, de préférence le groupe carboxylate d'ammonium, étant présent(s) en association avec au moins un groupe hydroxyle, carbonyle, carboxyle, éther et/ou amino.

5. Composition de protection de bas de caisse selon une ou plusieurs des revendications 1 à 4, caractérisée en ce que le ou les acides carboxyliques, l'acide gras, l'acide gras substitué ou le sel alcalin de l'acide carboxylique ou leurs mélanges contenant un ou des groupes polaires, de préférence le sel d'ammonium du ou des acides carboxyliques, est (sont) remplacé(s), jusqu'à 70% en poids (par rapport à 100 parties en poids des acides carboxyliques contenant des groupes polaires mis en oeuvre pour le traitement de surface), de préférence jusqu'à 50% en poids, par un acide monocarboxylique saturé et/ou insaturé ne contenant pas, à côté des groupes carboxyles ou carboxylates, d'autres groupes polaires, leurs sels alcalins, de préférence le sel d'ammonium, avec C₂-C₃₂ et/ou par de l'acide humique (ou acide d'humus), un sel alcalin de celui-ci, de préférence le sel d'ammonium.

6. Composition de protection de bas de caisse selon une ou plusieurs des revendications 1 à 5, caractérisée en ce que la composition de protection de bas de caisse contient
10 à 60 parties en poids, de préférence
25 à 45 parties en poids
d'homo-, co- ou terpolymère de chlorure de vinyle,
10 à 60 parties en poids, de préférence
20 à 45 parties en poids
d'un plastifiant ou d'un mélange de plastifiants,
12 à 1 partie en poids, de préférence
6 à 2 parties en poids
d'au moins un colorant ou un colorant pigmentaire, un additif et/ou un additif ou adjuvant de transformation, de préférence d'un agent d'accrochage et/ou d'un stabilisant,
10 à 60 parties en poids, de préférence
15 à 40 parties en poids
d'au moins une charge, de préférence d'un carbonate de calcium traité en surface ou d'un mélange de charges contenant du carbonate de calcium traité en surface, ou est constitué par ceux-ci, lequel est pourvu
de 0,3 à 12% en poids, de préférence
de 1 à 5% en poids
(par rapport à 100 parties en poids du carbonate de calcium traité en surface ou du mélange de charges traité en surface, de préférence du carbonate de calcium s'y trouvant) d'au moins un acide carboxylique, un acide gras, un acide gras substitué, un sel de ce composé ou un dérivé d'acide gras, saturé et/ou insaturé, contenant, à côté d'au moins un groupe -COOH, au moins un groupe polaire, de préférence d'au moins un acide monocarboxylique, un acide gras, un acide dicarboxylique aliphatique, saturé et/ou insaturé contenant un groupe hydroxyle, carbonyle, carboxyle, éther et/ou amino ou d'au moins un sel de cet acide monocarboxylique ou acide dicarboxylique contenant au moins un groupe polaire, de préférence le sel d'ammonium de ceux-ci avec
C₂ à C₃₂, de préférence
C₁₀ à C₂₂,
lequel est disposé à la surface ou sur une partie de la surface de la charge ou du mélange de charges, de préférence du carbonate de calcium.

7. Composition de protection de bas de caisse selon une ou plusieurs des revendications 1 à 6, caractérisée en ce que la couche superficielle ou l'agent de traitemment de surface de la charge ou du mélange de charges contenu dans la composition de protection de bas de caisse, de préférence du carbonate de calcium ou du mélange de charges contenant du carbonate de calcium est constituée
par 0,01 à 20% en poids, de préférence
par 0,1 à 6% en poids
d'au moins un acide carboxylique, un acide dicarboxylique, un acide gras, un acide gras substitué, un sel de ce composé ou un dérivé d'acide gras insaturé ne contenant, à côté d'au moins un groupe -COOH, aucun ou au moins un groupe polaire, de préférence par au moins un acide monocarboxylique, un acide dicarboxylique aliphatique insaturé contenant des groupes hydroxyles, carbonyles, carboxyles, amino et/ou éthers ou au moins un sel de cet acide monocarboxylique ou dicarboxylique contenant au moins un groupe non polaire et/ou polaire (rapportés au total à 100 parties en poids de l'acide carboxylique, de l'acide gras, de l'acide gras substitué, du sel d'acide gras ou du dérivé d'acide gras aliphatique mis en oeuvre) et
par 99,99 à 80% en poids, de préférence
par 99,9 à 94% en poids
d'au moins un acide carboxylique, un acide dicarboxylique, un acide gras, un acide gras substitué, un sel de ce composé ou un dérivé d'acide gras, saturé, contenant, à côté d'au moins un groupe -COOH, au moins un groupe polaire, de préférence par au moins un acide monocarboxylique, un acide dicarboxylique aliphatique saturé contenant des groupes hydroxyles, carbonyles, carboxyles, amino et/ou éthers ou par au moins un sel de cet acide monocarboxylique ou acide dicarboxylique contenant au moins un groupe polaire, ou contient ceux-ci en tant que composant.

8. Composition de protection de bas de caisse selon une ou plusieurs des revendications 1 à 7, caractérisée en ce que l'agent de traitement de surface pour la charge ou le mélange de charges, de préférence pour le carbonate de calcium contient un sel alcalin ou d'ammonium d'un acide carboxylique, d'un acide dicarboxylique, d'un acide gras ou d'un acide gras substitué, saturé ou insaturé, contenant au moins un groupe hydroxyle, de préférence un sel alcalin ou d'ammonium d'un acide gras ou d'un acide gras substitué contenant au moins un groupe hydroxyle et/ou des groupes carboxyles additionnels, ou est constitué par ceux-ci.

9. Composition de protection de bas de caisse selon une ou plusieurs des revendications 1 à 8, caractérisée en ce que la composition de protection de bas de caisse contient un carbonate de calcium synthétique traité en surface, de préférence préparé par introduction d'anhydride carbonique dans une suspension d'hydroxyde de calcium et par un traitement superficiel subséquent du carbonate de calcium obtenu à l'aide d'un sel alcalin ou d'ammonium d'un acide carboxylique, d'un acide dicarboxylique, d'un acide gras ou d'un acide gras substitué, saturé ou insaturé, contenant au moins un groupe polaire, de préférence à l'aide d'au moins un sel de l'acide monocarboxylique, de l'acide gras ou de l'acide dicarboxylique contenant au moins un groupe hydroxyle, carbonyle, carboxyle, amino et/ou éther.

10. Composition de protection de bas de caisse selon une ou plusieurs des revendications 1 à 9, caractérisée en ce que la couche superficielle formée à la surface du carbonate de calcium synthétique après application de l'agent de traitement consiste en un sel de calcium et/ou alcalin, ainsi qu'éventuellement en un sel d'ammonium d'au moins un acide gras en C₁₀ à C₂₂ contenant au moins un groupe hydroxyle, de préférence l'acide 12-hydroxystéarique, ou contient celui-ci.

11. Procédé de préparation d'une composition de protection de bas de caisse pour véhicules automobiles, dans lequel on mélange ensemble les composants contenant essentiellement au moins un homo-, co-, ter- ou polymère greffé de chlorure de vinyle finement divisé, au moins un plastifiant, au moins un stabilisant, au moins une charge à base de carbonate de calcium ou un mélange de charges contenant du carbonate de calcium et au moins un agent d'accrochage et/ou un autre additif ou adjuvant, ainsi qu'éventuellement au moins un colorant, un colorant pigmentaire, un solvant et/ou un diluant, caractérisé en ce que le carbonate de calcium, de préférence le carbonate de calcium synthétique, avant addition à la composition de protection de bas de caisse ou à un ou plusieurs composants de la composition de protection de bas de caisse, est mélangé et traité à des températures
de 278 K à 368 K, de préférence
de 328 K à 358 K
avec une solution, une émulsion ou une suspension, contenant au moins un diluant ou un solvant, d'un agent de traitement de surface sous forme d'un acide carboxylique, d'un acide dicarboxylique, d'un acide gras, d'un acide gras substitué, d'un sel de ces composés ou d'un dérivé d'acide gras, saturé et/ou insaturé, contenant, à côté d'au moins un groupe -COOH, au moins un groupe polaire, de préférence d'au moins un acide monocarboxylique, un acide gras, un acide dicarboxylique, aliphatique, saturé et/ou insaturé, contenant au moins un groupe hydroxyle, carbonyle, carboxyle, éther et/ou amino, ou d'au moins un sel de cet acide monocarboxylique ou acide dicarboxylique en C₂ à C₂₂ contenant au moins un groupe polaire, qu'après l'opération, le carbonate de calcium avec la couche superficielle formée à la surface est séparé par filtration et traité, de préférence séché et broyé.

12. Utilisation d'un carbonate de calcium ou d'un mélange de charges contenant du carbonate de calcium qui, par traitement à l'aide d'un agent de revêtement superficiel à base d'un acide carboxylique, d'un acide gras, d'un acide gras substitué, d'un acide dicarboxylique, d'un sel de ce composé ou d'un dérivé d'acide gras, saturé et/ou insaturé, contenant à côté d'au moins un groupe -COOH, au moins un groupe polaire, de préférence d'au moins un acide monocarboxylique, un acide gras ou un acide dicarboxylique, saturé et/ou insaturé, contenant au moins un groupe hydroxyle, carbonyle, carboxyle, éther et/ou amino ou d'au moins un sel de l'acide monocarboxylique
en C₂ à C₃₂, de préférence
en C₁₀ à C₂₂
contenant au moins des groupes polaires, produit un revêtement superficiel ou une conversion superficielle sur une partie ou la totalité de la surface du carbonate de calcium si bien que le revêtement superficiel consiste en des sels alcalins et/ou alcalino-terreux polaires des acides carboxyliques, acides gras, acides dicarboxyliques ou carboxylates ou les contient, pour le réglage de la rhéologie des compositions de protection de bas de caisse.

13. Composition de protection de bas de caisse pour véhicules automobiles selon la revendication 1, caractérisée en ce que le carbonate de calcium ou le mélange de charges, de préférence le carbonate de calcium contenu dans le mélange de charges est pourvu
de 1 à 5% en poids
(par rapport à 100 parties en poids du carbonate de calcium traité en surface ou du mélange de charges traité en surface, de préférence du carbonate de calcium s'y trouvant) d'un acide monocarboxylique ou d'un acide gras aliphatique, saturé et/ou insaturé contenant au moins un groupe polaire, au moins un groupe hydroxyle, carbonyle, éther et/ou amino ou d'au moins un sel de cet acide monocarboxylique en C₂ à C₃₂, de préférence en C₁₀ à C₂₂ contenant au moins un groupe polaire, lequel est disposé à la surface ou sur une partie de la surface du carbonate de calcium.
